# EUROPÄISCHE PATENTANMELDUNG

(11) **EP 3 093 534 A1**
(43) Veröffentlichungstag der Anmeldung: **16.11.2016**
(21) Anmeldenummer: 15167622.8
(22) Anmeldetag: 13.05.2015
(51) Int. Cl.: F16H 57/08

(54) **VERDREHSICHERUNG FÜR PLANETENBOLZEN EINES PLANETENGETRIEBES, PLANETENGETRIEBE MIT EINEM DREHFESTEN PLANETENBOLZEN UND WINDENERGIEANLAGE MIT EINEM SOLCHEN PLANETENGETRIEBE**

(71) Anmelder: Siemens Aktiengesellschaft, 80333 München (DE)
(72) Erfinder: Daners, Dominikus, 45701 Herten (DE); Vriesen, Johannes, 46399 Bocholt (DE)

(57) **Zusammenfassung**

Die Erfindung ist ein Planetenradbolzen (18) zur drehfesten Kombination mit einer Wange (14, 16) eines Planetenträgers (12) einer Planetengetriebestufe, wobei der Planetenradbolzen (18) auf einer Stirnseite eine formschlüssig in eine in einer Wange (14, 16) des Planetenträgers (12) gebildete Formschlussaufnahme (36, 38) einführbare Formschlusskontur (34) aufweist, eine Planetengetriebestufe mit zumindest einem derartigen Planetenradbolzen (18) sowie eine Windenergieanlage mit einer solchen Planetengetriebestufe.

## Beschreibung

Die Erfindung betrifft zuvorderst eine Verdrehsicherung für Planetenradbolzen (Planetenbolzen) eines Planetengetriebes oder einer Planetenstufe. Die Erfindung betrifft im Weiteren ein Planetengetriebe mit einem drehfesten Planetenbolzen sowie auch eine Windenergieanlage mit einem solchen Planetengetriebe.

Zum Sichern der Planetenbolzen gegen Verdrehen sind bisher Verdrehsicherungen verwendet worden, insbesondere Verdrehsicherungen mittels einer Passfeder oder Verdrehsicherungen mittels eines Sicherungsstifts.

Solche Verdrehsicherungen erfordern Platz, aber vor allem zusätzliche Bauteile, zum Beispiel in Form von Schrauben, Stiften, Passfedern und dergleichen, die bei einem Bruch, zum Beispiel bei einem Bruch aufgrund von Überbelastung, in die Verzahnung des Getriebes gelangen können.

Eine Aufgabe der vorliegenden Erfindung besteht ausgehend hiervon darin, eine weitere Möglichkeit zur Verdrehsicherung von Planetenbolzen in einem Planetenträger anzugeben.

Diese Aufgabe wird erfindungsgemäß mittels eines als Planetenradachse fungierenden und im Folgenden mitunter kurz als Planetenbolzen bezeichneten Planetenradbolzens mit den Merkmalen des ersten unabhängigen Anspruchs sowie mittels einer im Folgenden mitunter kurz als Planetenstufe bezeichneten Planetengetriebestufe mit den Merkmalen des zweiten unabhängigen Anspruchs gelöst.

Bei dem zur drehfesten Kombination mit einer Wange eines Planetenträgers (Planetenträgerwange) einer Planetengetriebestufe bestimmten Planetenbolzen ist gemäß dem hier vorgeschlagenen Ansatz vorgesehen, dass der Planetenbolzen zumindest einseitig auf einer Stirnseite/Stirnfläche eine formschlüssig in eine in zumindest einer Planetenträgerwange gebildete Formschlussaufnahme einführbare Formschlusskontur, also einen stirnseitigen Zapfen mit einer Formschlusskontur (Formschlusszapfen), aufweist.

Bei einer Planetenstufe, welche die Verwendung der hier vorgeschlagenen Möglichkeit zur Verdrehsicherung eines Planetenbolzens oder aller Planetenbolzen erlaubt und entsprechend mit einem Planetenbolzen der hier und im Folgenden beschriebenen Art kombinierbar ist, ist vorgesehen, dass ein Planetenträger der Planetenstufe eine erste und eine zweite Planetenträgerwange umfasst, dass der Planetenträger in zumindest einer Planetenträgerwange eine Formschlussaufnahme aufweist, dass die Formschlussaufnahme korrespondierend zum Formschlusszapfen des Planetenbolzens und zu dessen formschlüssiger Aufnahme ausgeführt ist und dass der Planetenbolzen oder jeder Planetenbolzen zur drehfesten Anbringung an dem Planetenträger mit seiner Formschlusskontur in die Formschlussaufnahme einführbar ist.

Der Vorteil der Erfindung besteht darin, dass die drehfeste Lagerung des Planetenbolzens am Planetenträger nur mittels der speziellen Formgebung des Planetenbolzens, nämlich mittels der an zumindest einer Stirnseite ausgebildeten Formschlusskontur, und einer korrespondierenden Formschlussaufnahme erreicht ist. Als Formschlusskontur/Formschlusszapfen kommen zum Beispiel ein Vierkant, ein Sechskant und dergleichen in Betracht.

Zusatzteile, wie sie bisher für die Herstellung einer drehfesten Anbringung eines Planetenbolzens am Planetenträger notwendig waren, sind nicht erforderlich. Entsprechend reduziert sich der Arbeitsaufwand beim Montieren eines Planetenträgers, denn die drehfeste Lagerung des Planetenbolzens wird - kurz gefasst - durch das Einführen des mit der Formschlusskontur versehenen Endes des Planetenbolzens in ein Sackloch in einer Planetenträgerwange, an dessen Boden sich eine zur formschlüssigen Aufnahme der Formschlusskontur bestimmte Formschlussaufnahme befindet, erreicht. Des Weiteren können jetzt zum Erhalt der Drehfestigkeit nicht mehr benötigte Zusatzteile, wie zum Beispiel Schrauben, Stifte, Passfedern und dergleichen, im Betrieb auch nicht mehr in die Verzahnung der Planetenstufe gelangen.

Aus der DE 43 08 975 A1 ist eine Wellen-Naben-Verbindung bekannt, bei der die Welle mit einem profilierten Wellenabschnitt in ein korrespondierend profiliertes Sackloch einer Nabe eingreift. Aus der EP 2 495 468 A2 ist ein Planetengetriebe bekannt, bei dem eine Sonnenradwelle zur Drehmomentübertragung mit einem anschließenden Wellenabschnitt drehfest mittels einer Polygonverbindung kombiniert ist. Im Unterschied zu den dort jeweils im Vordergrund stehenden Übertragungen der jeweiligen Drehmomente geht es bei dem hier vorgeschlagenen Ansatz nicht um eine Kraftübertragung, sondern um eine zusätzliche und verbesserte Möglichkeit zum Erhalt einer drehfesten Lagerung des jeweiligen Planetenbolzens.

Die abhängigen Ansprüche sind auf bevorzugte Ausführungsformen der vorliegenden Erfindung gerichtet.

Eine zumindest einseitig auf einer Stirnseite gebildete und formschlüssig in eine in zumindest einer Planetenträgerwange gebildete Formschlussaufnahme einführbare, konvexe Formschlusskontur hat den Vorteil, dass - anders als zum Beispiel bei einem ebenfalls als Formschlusskontur in Frage kommenden Zahnkranzprofil - die Formschlusskontur keine aus deren Basisfläche herausstehenden Bereiche, zum Beispiel Zähne, aufweist, die in erhöhtem Umfang Scherkräften und dergleichen ausgesetzt sind. Ein konvexes Polygon, also zum Beispiel ein regelmäßiges Sechseck, sind Beispiele für als konvexe Formschlusskontur in Betracht kommende Grundformen. Konvex ist bekanntlich jede Form, bei der jede Verbindung zwischen zwei beliebigen Randpunkten vollständig innerhalb der jeweiligen Form verläuft.

Bei einer Ausführungsform des Planetenbolzens mit einer konvexen Formschlusskontur ist vorgesehen, dass die konvexe Formschlusskontur kantenfrei ist. Als kantenfreie konvexe und eine Drehfestigkeit bewirkende Formschlusskontur kommt zum Beispiel eine Formschlusskontur auf Basis einer elliptischen Grundform in Betracht.

Bei einer besonderen Ausführungsform des Planetenbolzens mit einer konvexen und kantenfreien Formschlusskontur ist diese in Form eines sogenannten P3G-Polygons (DIN 32711) oder alternativ in Form eines P4G-Polygons ausgeführt. Eine solche Grundform des stirnseitigen Formschlusszapfens des Planetenbolzens gewährleistet eine besonders hohe Funktionsfläche und damit ergeben sich günstige Verhältnisse in Bezug auf eine gleichmäßige Kraftübertragung vom Planetenbolzen in den Planetenträger.

Bei einer Ausführungsform der eingangs skizzierten Planetenstufe weist der Planetenträger in zumindest einer Planetenträgerwange die Formschlussaufnahme am Boden eines vor der Formschlussaufnahme zylindrischen Sacklochs auf. Der zylindrische Abschnitt des Sacklochs nimmt einen ebenfalls zylindrischen Abschnitt des Planetenbolzens auf. Der zylindrische Abschnitt des Sacklochs fungiert als weitere Formschlussaufnahme und bewirkt eine radiale Fixierung des nach dem Einführen in das Sackloch zunächst nur einseitig an einer Planetenträgerwange gehaltenen Planetenbolzens. Aufgrund dieser Fixierung kann die beidseitige Lagerung des Planetenbolzens oder aller Planetenbolzen vergleichsweise einfach durch axiales Annähern der beiden Wangen des Planetenträgers erreicht werden.

Bei einer besonderen Ausführungsform einer Planetenstufe weisen der Planetenbolzen beidseitig in jeder Stirnseite eine Formschlusskontur und jede Wange des Planetenträgers eine Formschlussaufnahme zur formschlüssigen Aufnahme jeweils einer Formschlusskontur auf. Die beidseitige Formschlusskontur und die jeweilige Formschlussaufnahme gewährleistet eine deutliche Erhöhung der zur Verdrehsicherung wirksamen Funktionsfläche, bei identischen Formschlusskonturen auf beiden Seiten des Planetenbolzens oder jedes Planetenbolzens resultiert eine Verdopplung der Funktionsflächen. Bei einer besonderen Ausführungsform kann eine Formschlusskontur (ein einseitiger Formschlusszapfen) im Vergleich zu der am gegenüberliegenden Ende des Planetenbolzens befindlichen Formschlusskontur größer ausgeführt sein, so dass sich mehr als eine Verdopplung der Funktionsflächen ergibt. Als größere Formschlusskontur wird eine Formschlusskontur mit einem größeren Radius eines um die Formschlusskontur gelegten Hüllkreises aufgefasst.

Eine Planetenstufe der hier und im Folgenden beschriebenen Art kommt aufgrund der dort herrschenden Kräfte besonders zur Verwendung in einer Windenergieanlage in Betracht. Entsprechend ist die vorliegende Erfindung auch eine Windenergieanlage mit einer solchen Planetenstufe.

Schließlich ist die Erfindung auch die Verwendung einer kantenfreien Formschlusskontur, insbesondere einer Formschlusskontur in Form eines PG-Polygons, als zumindest einseitige Verdrehsicherung für einen mit zumindest einer Wange eines Planetenträgers verbundenen oder verbindbaren Planetenbolzen, insbesondere in einer Windenergieanlage.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: einen Ausschnitt aus einem Planetengetriebe
- FIG 2: eine stirnseitige Ansicht eines Planetenbolzens mit einer zur drehfesten Fixierung bestimmten Formschlusskontur,
- FIG 3: eine isometrische Ansicht eines Planetenbolzens und
- FIG 4: sowie
- FIG 5: Darstellungen zur Veranschaulichung des Orts der drehfesten Fixierung des Planetenbolzens.

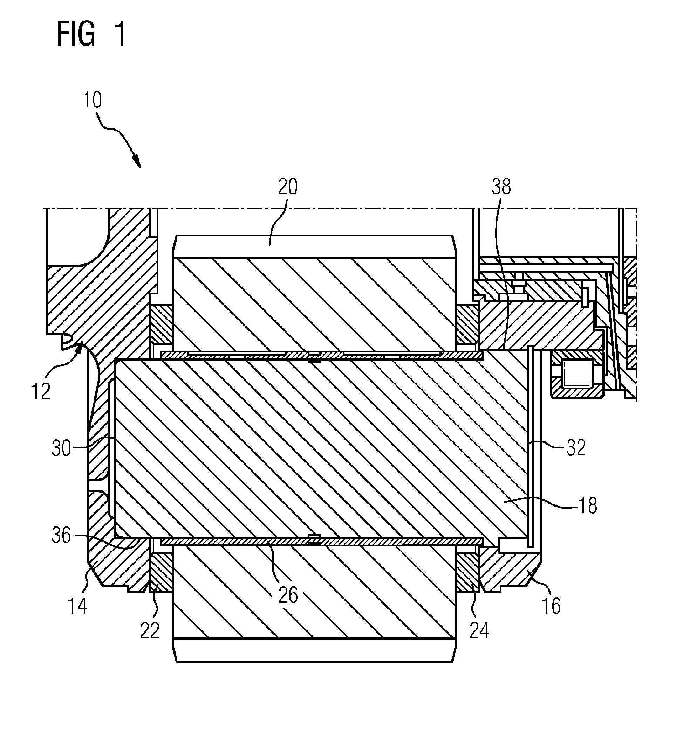

Die Darstellung in FIG 1 zeigt in einem geschnittenen Ausschnitt aus einem grundsätzlich an sich bekannten Planetengetriebe 10 eine Planetengetriebestufe. Eine ausführliche Beschreibung eines Planetengetriebes 10 findet sich zum Beispiel in der EP 2 383 480 A1, auf die zur Vermeidung einer Beschreibung von hier eher nachrangigen Details verwiesen wird.

Gezeigt sind als Bestandteile der Planetengetriebestufe ein Planetenträger 12, ein von zwei Wangen (Planetenträgerwangen 14, 16) gehaltener und als Planetenradachse fungierender Planetenradbolzen 18 (Planetenbolzen) sowie ein Planetenrad 20, das in an sich bekannter Art und Weise mit einem hier nicht gezeigten Sonnenrad kämmt. Zur radialen und axialen Lagerung des Planetenrads 20 sind jeweils Gleitlager 22, 24, 26 vorgesehen.

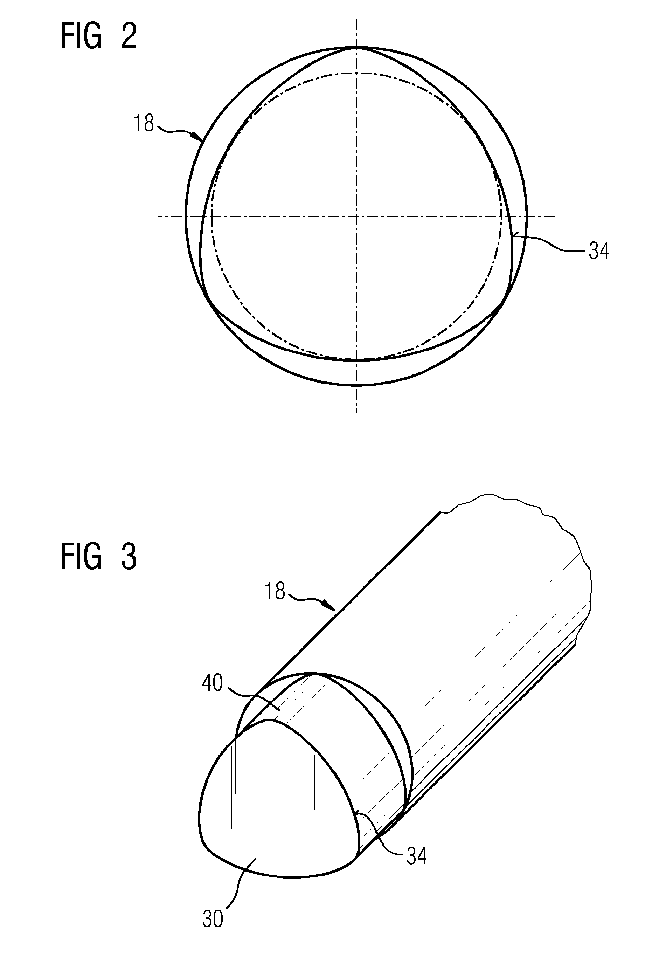

Der Planetenbolzen 18 weist zumindest einseitig auf einer Stirnseite 30, 32 eine Formschlusskontur 34 (FIG 2) auf. In der Darstellung in FIG 2 ist dazu eine stirnseitige Ansicht des Planetenbolzens 18 mit der Formschlusskontur 34 gezeigt. FIG 3 zeigt eine isometrische Ansicht des Planetenbolzens 18.

Bei der Darstellung in FIG 2 fällt ein Hüllkreis um die Formschlusskontur 34 in etwa mit dem Außenrand des Planetenbolzens 18 zusammen. Bei der Darstellung in FIG 3 ist ein Hüllkreis um die Formschlusskontur 34 deutlich kleiner als der Außenrand des Planetenbolzens 18. Dies soll verdeutlichen, dass entsprechende Variationen in der Geometrie möglich sind und gemäß den jeweiligen Anforderungen ausgewählt werden können.

Bei der in FIG 2 und FIG 3 dargestellten Ausführungsform handelt es sich bei der Formschlusskontur 34 um eine Formschlusskontur in Form eines sogenannten P3G-Polygons gemäß DIN 32711. Die Formschlusskontur 34 ist in einem stirnseitigen und als Formschlusselement fungierenden Zapfen (Formschlusszapfen 40) des Planetenbolzens 18 gebildet. Die Formschlusskontur 34 (der Formschlusszapfen 40) ist formschlüssig in eine in einer Wange 14, 16 des Planetenträgers 12 gebildete Formschlussaufnahme 36, 38 einführbar. Bei der gezeigten Ausführungsform fungiert ein Sackloch oder zumindest ein Bodenabschnitt eines Sacklochs als eine erste Formschlussaufnahme 36. Am gegenüberliegenden Ende des Planetenbolzens 18 fungiert eine Bohrung in der dortigen Wange 16 des Planetenträgers 12 als zweite Formschlussaufnahme 38.

Die Formschlussaufnahme 36, 38 ist korrespondierend zur Formschlusskontur 34 ausgeführt und zur formschlüssigen Aufnahme der Formschlusskontur 34, also zur formschlüssigen Aufnahme des Formschlusszapfens 40, bestimmt. Eine zumindest einseitige Formschlusskontur 34 am Planetenbolzen 18 und eine entsprechende Formschlussaufnahme 36, 38 bewirken eine drehfeste Lagerung des Planetenbolzens 18 im Planetenträger 12. Grundsätzlich ist eine solche drehfeste Lagerung beidseitig möglich, wobei aber davon auszugehen ist, dass eine einseitige derartige Lagerung zur drehfesten Fixierung des Planetenbolzens 18 ausreicht.

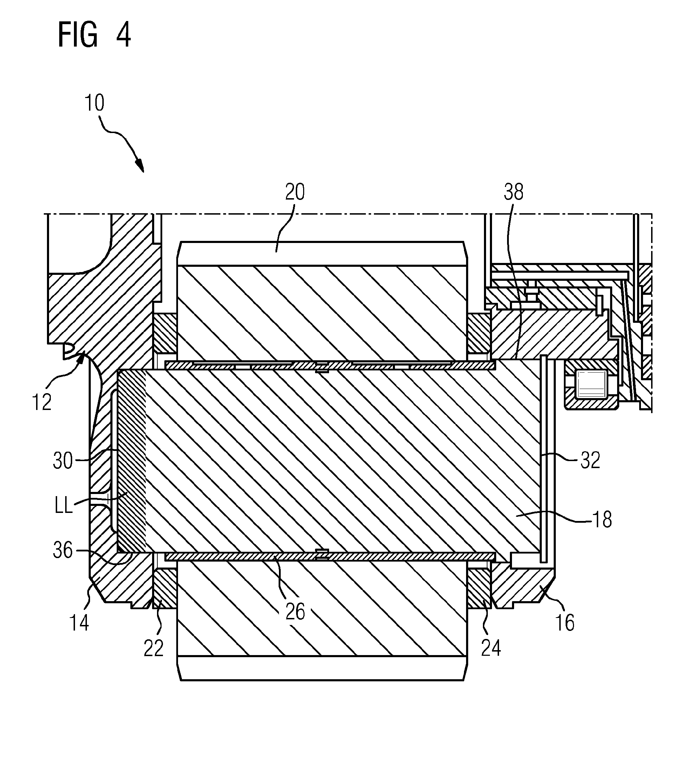

Die Darstellung in FIG 4 ist im Wesentlichen eine Wiederholung der Darstellung aus FIG 1. Abweichend zu der Darstellung in FIG 1 ist der Bereich, in dem durch Zusammenwirken der Formschlusskontur 34 und der Formschlussaufnahme 36 die drehfeste Lagerung des Planetenbolzens 18 bewirkt wird, durch eine andere Schraffur hervorgehoben. Der Bereich ist zusätzlich mit "LL" für "Lagerung links" bezeichnet, wobei sich die Angabe "links" ausschließlich auf die Verhältnisse in der Darstellung bezieht.

Die Darstellung in FIG 4 zeigt auch, dass bei einer Ausführungsform die Formschlussaufnahme 36 am Boden eines Sacklochs in der Planetenträgerwange 14 gebildet sein kann. Das Sackloch ist zunächst zylindrisch und nimmt dort einen entsprechenden zylindrischen Abschnitt des Planetenbolzens 18 auf. Am Boden des Sacklochs befindet sich die Formschlussaufnahme 36 und dieses nimmt die Formschlusskontur 34 und den Formschlusszapfen 40 auf.

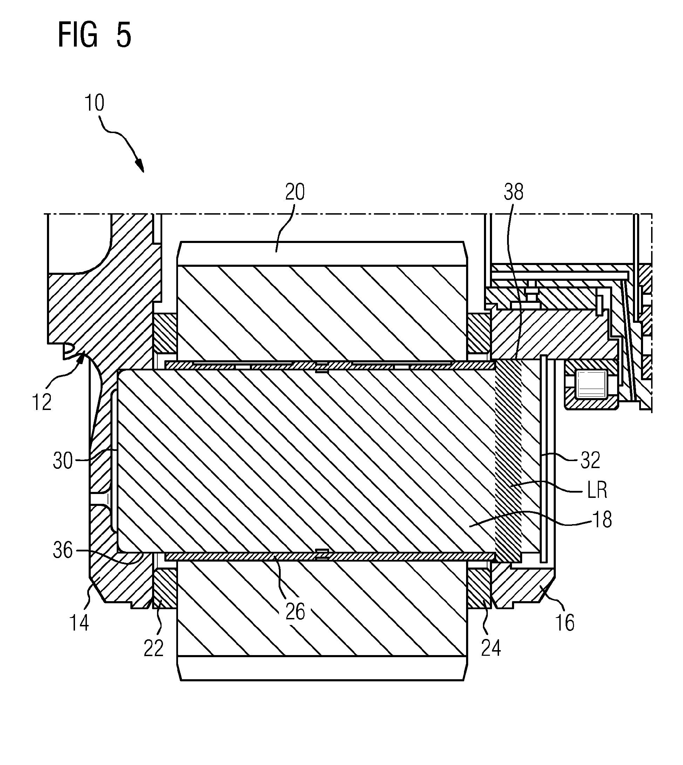

Die Darstellung in FIG 5 ist ebenso im Wesentlichen eine Wiederholung der Darstellung aus FIG 1. Abweichend zu der Darstellung in FIG 1 ist auch dort der Bereich, in dem durch Zusammenwirken der Formschlusskontur 34 und der Formschlussaufnahme 38 die drehfeste Lagerung des Planetenbolzens 18 bewirkt wird, durch eine andere Schraffur hervorgehoben. Der Bereich ist zusätzlich mit "LR" für "Lagerung rechts" bezeichnet, wobei sich die Angabe "rechts" ebenfalls ausschließlich auf die Verhältnisse in der Darstellung bezieht.

Die Darstellung in FIG 5 deutet an, dass auch bei der dortigen drehfesten Lagerung die Höhe der Formschlusskontur 34 und entsprechend die Höhe der Formschlussaufnahme 38 kleiner als die Tiefe der Bohrung in der Planetenträgerwange 16 sein kann. Die Höhe der Formschlusskontur 34 / Formschlussaufnahme 38 kann selbstverständlich auch der Tiefe der Bohrung entsprechen.

Die beiden Möglichkeiten zur jeweils einseitigen drehfesten Lagerung des Planetenbolzens 18 (FIG 4 bzw. FIG 5) können auch kombiniert werden, so dass sich dann eine beidseitige drehfeste Lagerung des Planetenbolzens 18 ergibt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Planetenbolzen 18 zur drehfesten Kombination mit einer Wange 14, 16 eines Planetenträgers 12 einer Planetengetriebestufe, wobei der Planetenbolzen 18 zumindest einseitig auf einer Stirnseite eine formschlüssig in eine in zumindest einer Wange 14, 16 des Planetenträgers 12 gebildete Formschlussaufnahme 36, 38 einführbare Formschlusskontur 34 aufweist, sowie ein Planetengetriebe 10 oder eine Planetengetriebestufe mit zumindest einem derartigen Planetenbolzen 18. Ein solches Planetengetriebe 10 bzw. eine solche Planetengetriebestufe kommt besonders zur Verwendung in einer Windenergieanlage in Betracht.

## Patentansprüche

1. Planetenradbolzen (18) zur drehfesten Kombination mit einer Wange (14, 16) eines Planetenträgers (12) einer Planetengetriebestufe,
wobei der Planetenradbolzen (18) zumindest einseitig auf einer Stirnseite eine formschlüssig in eine in zumindest einer Wange (14, 16) des Planetenträgers (12) gebildete Formschlussaufnahme (36, 38) einführbare Formschlusskontur (34) aufweist.

2. Planetenradbolzen (18) nach Anspruch 1, mit einer konvexen Formschlusskontur (34).

3. Planetenradbolzen (18) nach Anspruch 2, mit einer kantenfreien Formschlusskontur (34).

4. Planetenradbolzen (18) nach Anspruch 2, mit einer Formschlusskontur (34) in Form eines P3G-Polygons.

5. Planetengetriebe (10) oder Planetengetriebestufe mit einem Planetenträger (12) und damit kombinierbaren Planetenradbolzen (18) nach einem der Ansprüche 1 bis 4,
wobei der eine erste und eine zweite Wange (14, 16) umfassende Planetenträger (12) in zumindest einer Wange (14 , 16) eine Formschlussaufnahme (36, 38) aufweist,
wobei die Formschlussaufnahme (36, 38) korrespondierend zur Formschlusskontur (34) und zur formschlüssigen Aufnahme der Formschlusskontur (34) ausgeführt ist und
wobei der Planetenradbolzen (18 zur drehfesten Anbringung an dem Planetenträger (12) mit seiner Formschlusskontur (34) in die Formschlussaufnahme (36, 38) einführbar ist.

6. Planetengetriebestufe nach Anspruch 5, wobei der Planetenträger (12) in zumindest einer Wange (14, 16) die Formschlussaufnahme (36, 38) am Boden eines vor der Formschlussaufnahme (36, 38) zylindrischen Sacklochs aufweist.

7. Planetengetriebestufe nach Anspruch 5 oder 6, wobei der Planetenradbolzen (18) beidseitig in jeder Stirnseite eine Formschlusskontur (34) und jede Wange (14, 16) des Planetenträgers (12) eine Formschlussaufnahme (36, 38) zur formschlüssigen Aufnahme jeweils einer Formschlusskontur (34) aufweist.

8. Planetengetriebe (10) mit einer Planetengetriebestufe nach einem der Ansprüche 5, 6 oder 7.

9. Windenergieanlage mit einer Planetengetriebestufe nach einem der Ansprüche 5, 6 oder 7.

10. Verwendung einer kantenfreien Formschlusskontur (34), insbesondere einer Formschlusskontur (34) in Form eines P3G-Polygons, als zumindest einseitige Verdrehsicherung für einen mit zumindest einer Wange (14, 16) eines Planetenträgers (12) verbundenen Planetenradbolzen (18).
